Europäisches Patentamt

European Patent Office

Office européen des brevets

(19)

(11) Numéro de publication: **0 166 291**
**A1**

# (12) DEMANDE DE BREVET EUROPEEN

(21) Numéro de dépôt: **85107140.7**

(22) Date de dépôt: **11.06.85**

(51) Int. Cl.⁴: **G 02 B 6/28**

(30) Priorité: **13.06.84 FR 8409199**

(43) Date de publication de la demande: **02.01.86**
**Bulletin 86/1**

(84) Etats contractants désignés: **DE FR GB IT NL**

(71) Demandeur: **LIGNES TELEGRAPHIQUES ET
TELEPHONIQUES L.T.T., 1, rue Charles Bourseul,
F-78702 Conflans-Ste-Honorine (FR)**

(72) Inventeur: **Gouali, Mohamed, 8, rue Jean Dolent,
F-75014 Paris (FR)**

(74) Mandataire: **Weinmiller, Jürgen et al, Zeppelinstrasse 63,
D-8000 München 80 (DE)**

(54) **Dispositif de distribution d'energie lumineuse et son utilisation a la commutation optique.**

(57) L'invention concerne un dispositif de distribution d'énergie lumineuse par fibres optiques.

Ce dispositif comporte une fibre d'entrée biseautée (2) qui est couplée à une pluralité de fibres de sortie (3) groupées en matrice par l'intermédiaire d'un réseau de diffraction (5) incliné par rapport à la fibre d'entrée biseautée sous un angle tel que le faisceau lumineux diffracté soit un faisceau parallèle sur le trajet duquel sont disposées les fibres de sortie.

Application aux systèmes de télédistribution.

# DISPOSITIF DE DISTRIBUTION D'ENERGIE LUMINEUSE ET SON UTILISATION A LA COMMUTATION OPTIQUE

La présente invention se rapporte d'une manière générale aux systèmes de télécommunications par fibres optiques et concerne plus particulièrement un dispositif de distribution d'énergie lumineuse ainsi qu'une utilisation de ce dispositif pour la commutation optique.

Dans les systèmes de télécommunications optiques, il est souvent nécessaire de distribuer ou répartir dans une pluralité de fibres optiques un même signal lumineux en provenance d'une ou plusieurs autres fibres optiques. Parmi les considérations importantes pour un dispositif remplissant une telle fonction figurent sa complexité pour l'obtention du plus grand nombre possible de voies de distribution, et ses pertes d'insertion.

Le brevet américain n° 4 285 570 décrit un type de dispositif de distribution d'énergie lumineuse par fibres optiques. Ce dispositif met en oeuvre une lentille autofocalisatrice connue sous la marque déposée SELFOC, consistant en un barreau en matériau réfringent à gradient d'indice, tel que par exemple en verre. Dans ce dispositif, une pluralité de fibres optiques solidaires longitudinalement les unes des autres sont couplées à une première face de la lentille, et un revêtement réfléchissant est déposé sur une seconde face, opposée à la première, de la lentille : parmi ces fibres, l'une dite d'entrée véhicule une onde lumineuse incidente qui pénètre dans la lentille pour s'y propager ; après réflexion sur la seconde face de la lentille, le faisceau lumineux émerge de la lentille au niveau de sa première face pour se répartir dans les autres fibres dites de sortie ou de distribution.

Toutefois, un tel dispositif de distribution d'énergie lumineuse présente un certain nombre d'inconvénients. En effet, comme la fibre d'entrée est placée du même côté que les fibres de sortie par rapport à la lentille, une partie de l'énergie lumineuse émergeant de la lentille entre également dans la fibre d'entrée, d'où un retour de la lumière dans la fibre d'entrée, ce qui crée une perturbation optique dans celle-ci. D'autre part, ce dispositif introduit de nombreuses pertes de Fresnel au niveau de l'interface fibres/lentille et au niveau du revêtement de la seconde face de la lentille. De plus, le nombre de voies de distribution est limité par les dimensions de la lentille en section droite, et le couplage maximal des fibres avec la lentille est difficile à effectuer.

La présente invention a pour but de remédier à ces inconvénients en proposant un dispositif permettant de distribuer dans un grand nombre de fibres optiques de sortie un même signal lumineux provenant d'une fibre optique d'entrée, et dans lequel la fibre d'entrée est totalement isolée des fibres de sortie.

A cet effet, l'invention a pour objet un dispositif de distribution d'énergie lumineuse comportant au moins une fibre optique d'entrée transmettant l'énergie lumineuse et une pluralité de fibres optiques de sortie destinées à recevoir cette énergie lumineuse, caractérisé en ce que la fibre d'entrée est biseautée sous un angle donné à son extrémité par laquelle émerge un faisceau lumineux réfracté, et en ce que le dispositif comporte un réseau de diffraction susceptible de recevoir le faisceau lumineux émergeant de la fibre d'entrée et incliné par rapport à l'extrémité biseautée de la fibre d'entrée sous un angle tel que le faisceau lumineux diffracté soit un faisceau sensiblement parallèle, les fibres de sortie étant disposées sur le trajet de ce faisceau parallèle.

L'invention vise également une utilisation de ce dispositif de distribution d'énergie lumineuse pour la commutation optique à grand nombre de voies, par mise en cascade de plusieurs fibres d'entrée et de plusieurs ensembles de fibres de sortie.

D'autres caractéristiques et avantages de l'invention apparaîtront mieux dans la description détaillée qui suit et se réfère aux dessins annexés donnés uniquement à titre d'exemple et dans lequels :

- la figure 1 représente une vue en coupe du dispositif de distribution d'énergie lumineuse selon l'invention ;

- la figure 2 représente une vue en perspective des fibres de sortie groupées en matrice ;

- les figures 3a et 3b représentent respectivement deux vues en section droite des fibres de sortie groupées en matrice selon deux variantes ;

- la figure 4 représente une vue en coupe du réseau de diffraction et des fibres de sortie dans le cas d'un faisceau diffracté légèrement divergent ;

- la figure 5 représente une vue en coupe d'un commutateur optique ; et

- la figure 6 représente une vue en coupe des faisceaux lumineux en sortie du réseau de diffraction de la figure 5, dans le cas d'un mélange de faisceaux lumineux diffractés.

Sur ces différentes figures, les mêmes références se rapportent aux mêmes éléments qui remplissent les mêmes fonctions en vue des mêmes résultats.

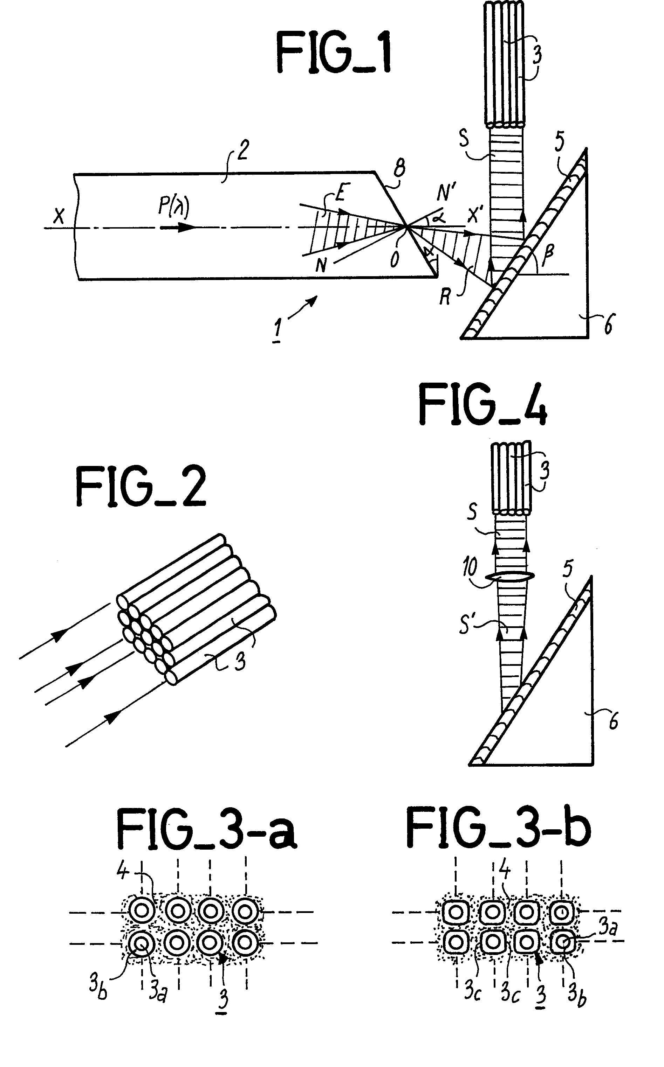

Sur la figure 1, on a représenté en 1 un dispositif conforme à l'invention pour distribuer ou répartir un même signal lumineux à une longueur d'onde donnée provenant d'une fibre optique d'entrée 2 dans une pluralité de fibres optiques identiques de sortie ou de distribution 3.

La fibre d'entrée 2 est une fibre de silice du type multimode à saut d'indice, tel que par exemple une fibre 100/140 microns pour laquelle l'ouverture numérique est de l'ordre de 0,29. A l'intérieur de cette fibre se propage une onde ou vibration lumineuse, repérée symboliquement en $P(\lambda)$, émise par une diode photoémettrice (non représentée) à une longueur d'onde donnée $\lambda$, égale par exemple à 1,3 microns.

Les fibres de sortie 3 sont soit des fibres de silice multimodes 50/125 microns à gradient d'indice soit de préférence des fibres monomodes 5/125 microns pour l'obtention d'un nombre élevé de voies de distribution. Comme on le verra par la suite, chacune de ces fibres est couplée à la fibre d'entrée de manière à recevoir le rayonnement lumineux $P(\lambda)$ guidé par la fibre d'entrée.

Pour permettre cette distribution d'énergie lumineuse dans les fibres de sortie 3, celles-ci sont groupées en matrice en étant jointives longitudinalement, c'est-à-dire avec leurs axes optiques respectifs parallèles et non confondus. La figure 2 illustre une telle matrice de fibres 3 avec un nombre de lignes et de colonnes représentées qui est donné uniquement à titre d'exemple et qui n'est pas limitatif.

La solidarisation des différentes fibres de sortie 3 entre elles peut être réalisée selon deux variantes représentées respectivement sur les figures 3a et 3b ; sur ces figures, la matrice de fibres en section droite est représentée partiellement et chaque fibre est définie par son coeur 3a et sa gaine optique 3b.

Selon une première variante illustrée sur la figure 3a, les différentes fibres 3 de la matrice sont collées longitudinalement les unes aux autres à l'aide d'une résine époxy 4 ayant un indice de réfraction adapté à celui des fibres, c'est-à-dire égal ou très voisin de celui-ci. Ainsi, à titre illustratif, l'indice de réfraction de la silice étant égal à 1,45, celui de la résine époxy est choisi égal à 1,47.

Selon une seconde variante préférée illustrée sur la figure 3b, les différentes parties de fibres adjacentes de la matrice sont d'abord abrasées sur une certaine profondeur de gaine, comme représentées en 3c, puis ces parties de fibres abrasées sont comblées longitudinalement par une résine époxy 4 d'indice de réfraction adapté, cette résine assurant également le collage des fibres entre elles. Cette variante a pour avantage de permettre un rapprochement très intime des différentes fibres, ce qui assure d'une part une diminution des pertes et d'autre part une distribution uniforme de l'énergie lumineuse dans ces fibres.

Comme il apparaît sur la figure 1, les fibres de sortie 3 groupées en matrice sont couplées à la fibre d'entrée 2 au moyen d'un élément optique intermédiaire constitué par un réseau de diffraction 5 du type holographique, de structure classique. Ce réseau de diffraction est par exemple un réseau plan incliné opérant par réflexion et monté sur un support en verre 6.

Selon un aspect de l'invention, la fibre d'entrée 2 présente une face d'émission 8 qui est biseautée sous un angle donné α formé entre son axe longitudinal XX' et la normale NN' à sa face d'émission. Ainsi, selon la valeur donnée à l'angle de biseautage α, l'énergie lumineuse guidée par la fibre d'entrée 2 et représentée symboliquement sur la figure 1 par le faisceau E se projetant au centre O de la face d'émission de la fibre 2, se trouve déportée en sortie de la fibre biseautée 2, comme cela est bien connu de l'homme du métier. On a représenté symboliquement en R sur la figure 1 le faisceau réfracté émergeant du centre O de la face biseautée 8 de la fibre d'entrée.

Pour assurer la répartition de l'énergie lumineuse émergeant de la fibre d'entrée 2 dans toutes les fibres de sortie 3 agencées en matrice, le réseau de diffraction 5 est incliné par rapport à l'axe XX' de la fibre d'entrée sous un angle β tel que le faisceau lumineux diffracté, représenté symboliquement en S sur la figure 1, soit un faisceau parallèle, c'est-à-dire non divergent. Toutes les fibres de sortie 3 parallèles entre elles sont alors positionnées sur le trajet de ce faisceau parallèle S qui pénètre donc dans chacune de ces fibres.

Ainsi, les deux paramètres à prendre en considération pour répartir le rayonnement lumineux provenant de la fibre d'entrée sont d'une part l'angle de biseautage α pour un déport du faisceau lumineux en sortie de la fibre d'entrée et d'autre part l'angle d'inclinaison β du réseau pour une diffraction sans divergence du faisceau lumineux déporté. A cet effet, les deux angles α et β peuvent être définis soit expérimentalement soit par calculs classiques basés sur l'optique géométrique. Du point de vue pratique, il est préférable de commencer par se fixer un angle de biseautage α, puis de rechercher un angle d'inclinaison β du réseau par rapport à la fibre d'entrée de telle sorte que le réseau donne naissance à un faisceau lumineux diffracté le plus parallèle possible. Cet angle β est déterminé également en fonction des divers paramètres connus propres aux réseaux de diffraction.

A titre illustratif, un bon couplage des fibres de sortie à la fibre d'entrée a été obtenu par la Demanderesse pour un angle de biseautage α égal à 25° et un angle d'inclinaison β de l'ordre de 15°. Cette réalisation a permis de grouper en matrice environ 600 fibres de sortie monomodes 5/125 microns, avec une fibre d'entrée 100/140 microns à saut d'indice.

Comme il apparaît sur la figure 1, les fibres de sortie 3 comme la fibre d'entrée biseautée 2 sont disposées sans aucun contact avec le réseau optique ayant une inclinaison inverse de celle de la fibre d'entrée, et forment avec ledit réseau ce qu'on appelle un modèle de prisme dans l'air.

On notera qu'il est possible d'augmenter le nombre de voies de distribution en disposant plusieurs fibres d'entrée jointives longitudinalement, biseautées par exemple sous un même angle donné et transmettant des signaux lumineux de même longueur d'onde, de façon à obtenir un rayonnement lumineux incident plus large sur le réseau de diffraction, et partant un faisceau diffracté parallèle également élargi.

La figure 4 illustre le cas où le faisceau diffracté S' n'est pas parfaitement parallèle par exemple suite à une orientation imparfaite du réseau de diffraction 5 par rapport à la fibre d'entrée. Dans ce cas, il est possible de corriger cette légère divergence du faisceau à l'aide d'une lentille de collimation classique 10 en sortie de laquelle le faisceau S désormais parallèle est distribué à toutes les fibres de sortie 3, comme précédemment.

La structure de base du dispositif de distribution d'énergie lumineuse qui vient d'être décrite peut être utilisée pour la commutation optique à grand nombre de voies, et qui consiste à acheminer un signal lumineux d'une longueur d'onde donnée transmis par l'une quelconque des N fibres optiques d'entrée vers une ou plusieurs fibres optiques d'un même ensemble choisi parmi N ensembles de fibres.

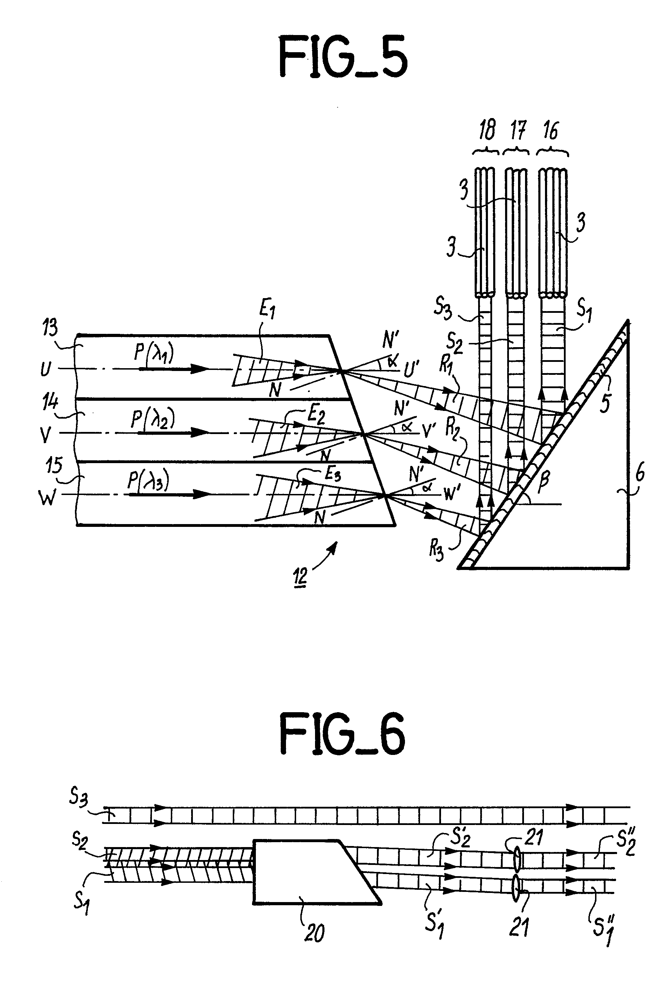

La figure 5 représente un tel commutateur optique 12 avec à titre d'exemple non limitatif trois fibres d'entrée identiques 13, 14 et 15 et trois ensembles 16, 17 et 18 de fibres de sortie identiques groupées en matrice et repérées chacune en 3.

Comme il apparaît sur cette figure 5, les trois fibres d'entrée 13, 14 et 15 transmettent des ondes lumineuses, repérées symboliquement en $P(\lambda_1)$, $P(\lambda_2)$ et $P(\lambda_3)$, émises à des longueurs d'onde données $\lambda_1$, $\lambda_2$ et $\lambda_3$, et destinées à être reçues sélectivement par les trois ensembles de fibres de sortie 16, 17 et 18. Les trois longueurs d'onde différentes utilisées sont égales respectivement par exemple à 0,76 micron, 0,90 micron et 1,3 microns.

Pour assurer la commutation optique, les trois fibres d'entrée sont jointives longitudinalement en étant rendues solidaires les unes des autres au moyen par exemple d'une résine époxy, et sont biseautées sous un angle donné formé entre leurs axes longitudinaux respectifs UU', VV' et WW' et la normale à leurs faces d'émission respectives. Pour des raisons d'encombrement, il est préférable que les trois fibres d'entrée présentent chacune le même angle de biseautage $\alpha$, comme représenté sur la figure 5, formé entre l'axe optique de chaque fibre et la normale NN' à sa face d'émission.

Comme à propos de la figure 1, chacun des trois faisceaux lumineux provenant des fibres d'entrée, et repérés symboliquement en $E_1$, $E_2$ et $E_3$, émerge de sa fibre d'entrée biseautée en étant déporté selon la valeur donnée à l'angle de biseautage $\alpha$. On a représenté symboliquement en $R_1$, $R_2$ et $R_3$ les trois faisceaux lumineux réfractés qui se projettent sur le réseau de diffraction 5 de même structure que celui décrit en référence à la figure 1.

Ce réseau de diffraction 5 assure donc la séparation des faisceaux lumineux incidents $R_1$, $R_2$ et $R_3$ par sélectivité des trois longueurs d'onde $\lambda_1$, $\lambda_2$ et $\lambda_3$. De plus, le réseau est orienté par rapport aux trois fibres d'entrée sous un angle $\beta$ déterminé comme précédemment, de telle sorte que les trois faisceaux diffractés repérés symboliquement en $S_1$, $S_2$ et $S_3$ soient des faisceaux parallèles séparés les uns des autres. Comme précédemment, chacun des trois ensembles 16, 17 et 18 de fibres de sortie groupées en matrice est disposé sur le trajet de son faisceau parallèle associé.

Ainsi, par cette disposition, les différentes énergies lumineuses transmises par les fibres d'entrée sont séparées en longueur d'onde par le réseau de diffraction 5 et sont distribuées sélectivement dans les différents ensembles de fibres de sortie.

Sur la figure 5, on a représenté les trois faisceaux lumineux diffractés $S_1$, $S_2$ et $S_3$ aux différentes longueurs d'onde $\lambda_1$, $\lambda_2$ et $\lambda_3$ qui sont parfaitement séparés les uns des autres. Toutefois, il peut se produire un certain mélange de ces faisceaux lumineux en sortie du réseau de diffraction.

La figure 6 représente le cas où deux des trois faisceaux lumineux diffractés $S_1$, $S_2$ et $S_3$ sont mélangés, à savoir par exemple les faisceaux $S_1$ et $S_2$. Sur cette figure, on n'a pas illustré le réseau de diffraction ainsi que les trois matrices de fibres de sortie, dans un souci de clarté.

Pour effectuer la séparation des deux faisceaux lumineux $S_1$ et $S_2$, un prisme 20 présentant un indice de réfraction homogène donné est placé sur le trajet de ces deux faisceaux lumineux qui se trouvent dès lors déviés en sortie du réseau, comme représentés en $S'_1$ et $S'_2$ sur la figure 6. Dans le cas où ces deux faisceaux lumineux séparés $S'_1$ et $S'_2$ sont légèrement divergents, il suffit de placer deux lentilles classiques 21 pour corriger cette divergence de façon à obtenir deux faisceaux parallèles $S''_1$ et $S''_2$.

Bien entendu, l'invention n'est nullement limitée au mode de réalisation décrit et représenté et comprend tous les équivalents techniques des moyens décrits ainsi que leurs combinaisons si celles-ci sont effectuées selon l'esprit de l'invention et mises en oeuvre dans le cadre des revendications qui suivent.

# REVENDICATIONS

1. Dispositif de distribution d'énergie lumineuse comportant au moins une fibre optique d'entrée (2) transmettant l'énergie lumineuse et une pluralité de fibres optiques de sortie (3) destinées à recevoir cette énergie lumineuse, caractérisé en ce que la fibre d'entrée est biseautée sous un angle donné (α) à son extrémité par laquelle émerge un faisceau lumineux réfracté, et en ce que le dispositif comporte un réseau de diffraction (5) susceptible de recevoir le faisceau lumineux émergeant de la fibre d'entrée et incliné par rapport à l'extrémité biseautée de la fibre d'entrée sous un angle ( β) tel que le faisceau lumineux diffracté soit un faisceau sensiblement parallèle, les fibres de sortie (3) étant disposées sur le trajet de ce faisceau parallèle.

2. Dispositif selon la revendication 1, caractérisé en ce que les fibres optiques de sortie (3) sont agencées sous forme d'une matrice en étant jointives longitudinalement.

3. Dispositif selon la revendication 2, caractérisé en ce que les fibres optiques de sortie (3) sont rendues solidaires les unes des autres au moyen d'une résine (4) d'indice de réfraction adapté à celui des fibres.

4. Dispositif selon l'une des revendications 1 à 3, caractérisé en ce que le réseau de diffraction (5) est un réseau plan opérant par réflexion.

5. Utilisation d'un dispositif de distribution d'énergie lumineuse tel que défini selon l'une quelconque des revendications précédentes, pour la commutation de différents signaux optiques de longueurs d'onde données transmis par un ensemble de fibres optiques d'entrée (13, 14, 15) et destinés à être reçus sélectivement par une pluralité

0166291

d'ensembles de fibres optiques de sortie (16, 17, 18), caractérisée en ce que les fibres d'entrée (13, 14, 15) sont chacune biseautées sous un angle donné et sont jointives longitudinalement, le réseau de diffraction (5) recevant les différents faisceaux lumineux émergeant des fibres d'entrée biseautées, et en ce que chaque ensemble de fibres de sortie est disposé sur le trajet de l'un des différents faisceaux parallèles diffractés par le réseau.

6. Utilisation selon la revendication 5, caractérisée en ce que toutes les fibres d'entrée (13, 14, 15) sont biseautées sous le même angle ($\alpha$).

0166291

1/2

FIG_1

FIG_2

FIG_4

FIG_3-a

FIG_3-b

0166291

# FIG_5

# FIG_6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| | | | G 02 B 6/28 |
| A | EP-A-0 037 680 (SPERRY CORP.)<br>* Abrégé; figure 3 * | 1,4,5 | |
| A | PATENTS ABSTRACTS OF JAPAN, vol. 2, no. 153, 22 décembre 1978, page 9764 E 78; & JP - A - 53 120 453 (NIPPON DENKI K.K.) 20-10-1978<br>* En entier * | 1,4 | |
| A | PATENTS ABSTRACTS OF JAPAN, vol. 4, no. 146, 15 octobre 1980, page 118 P 31; & JP - A - 55 95 907 (NIPPON DENSHIN DENWA KOSHA) 21-07-1980<br>* En entier * | 1,2,4 | |
| A | EP-A-0 002 873 (DE STAAT DER NEDERLANDEN)<br>* Abrégé; figure 7 * | 1 | DOMAINES TECHNIQUES RECHERCHES (Int. Cl.4)<br><br>G 02 B |
| A | APPLIED OPTICS, vol. 21, no. 23, décembre 1982, pages 4290-4295, New York, US; P. MATTHIJSSE et al.: "Optical fiber power-splitter with selectable splitting ratio" | | |

Le présent rapport de recherche a été établi pour toutes les revendications

| Lieu de la recherche<br>LA HAYE | Date d'achèvement de la recherche<br>18-09-1985 | Examinateur<br>MORRELL D.M. |
|---|---|---|